# EUROPEAN PATENT APPLICATION

(11) **EP 0 943 934 A2**
(43) Date of publication of application: **22.09.1999**
(21) Application number: 99302076.7
(22) Date of filing: 18.03.1999
(51) Int. Cl.: G02B 5/32

(54) **Optical device with holographic elements**

(30) Priority: 20.03.1998 GB 9805943
(71) Applicant: Marconi Electronic Systems Limited, Stanmore, Middlesex HA7 4LY (GB)
(72) Inventor: Freeman, Jonathan Paul, Rochester, Kent ME1 2UJ (GB)
(74) Representative: Tolfree, Roger Keith

(57) **Abstract**

An optical combination comprising two optical elements arranged to cooperate wherein, in use along a ray-path through the combination in a first direction radiation transmitted by a first optical element is reflected by a second optical element, radiation reflected by the second optical element is reflected by the first optical element, and radiation reflected by the first optical element is transmitted by the second optical element; and in the opposite direction radiation transmitted by the second optical element is reflected by the first optical element, radiation reflected by the first optical element is reflected by the second optical element, and radiation reflected by the second optical element is transmitted by the first optical element; and the angle of incidence of the radiation reflected at the second optical element is of a different magnitude to the angle of reflection of the radiation reflected at the second optical element.

## Description

The invention relates to the field of optics and more particularly to optical assemblies wherein conventional lenses are replaced by other means. The invention has application to, amongst others, the field of displays including head-up and helmet-mounted displays.

Head-up displays and helmet-mounted displays have proved useful in providing additional visual information to users such as aircraft pilots for whom changing their field of view in order to inspect a display screen would be unergonomic and potentially dangerous.

Current display types use conventional lenses or holographic elements in order to provide the user with a correctly focussed and positioned image that is as free as possible from aberration.

Conventional lenses are bulky and tend to introduce various forms of aberration. To counter such imperfections a conventional optical element normally comprises a plurality of lenses some of which function to compensate for aberrations introduced by the others, however such measures exacerbate the problem of bulk.

Transmissive holographic elements have increasingly been used in place of conventional lenses because of the reduction in volume that can be achieved, together with improved optical characteristics.

A conventional, transmission holographic element comprises a sheet of glass, gelatine or other transparent material the refractive index of which is modulated along a path passing through the thickness of the material between the major surfaces. This has the effect that the ray exiting the transmission holographic element is at an angle to the ray entering the element. This angled exit ray is called the first order ray. In a transmission hologram with focussing ability the angle of the first order ray can be made to vary across the major surface thereby bringing the first order rays to a focus and creating a lens replacement. However the transmission holographic element has a number of disadvantages: a significant proportion of the incident radiation passes through undeviated and forms an exit ray (called the zero order ray) parallel to the incident ray; a smaller proportion of incident radiation exits at angles greater than the angle of the first order ray, these weaker exit rays are termed second order, third order etc. A second problem with transmissive holographic elements is restricted angular bandwidth. Here angular bandwidth is used to describe the range of angles of incidence of radiation reaching the holographic element over which satisfactory performance is achieved. The freedom to select the level of modulation of the refractive index is also severely limited in transmission holographic elements as the efficiency of the holographic element is very sensitive to the amount of modulation and falls off rapidly as you move away from the optimum modulation value.

By way of contrast reflection holographic elements do not suffer from the zero order ray problem and sensitivity to the degree of modulation is much reduced, making it much easier to manufacture a reflective element than a transmissive one. However reflective holographic elements (in a similar way to optical mirrors) have the disadvantage that the incident and reflected rays occupy the same side of the optical element bringing the problem of interference of the radiation source or radiation sensor with the reflected or incident rays respectively. A conventional solution to this problem is to arrange the incident and/or reflected rays to be off-centre so that the radiation source is offset to one side of the normal to the reflective surface and/or the radiation sensor is offset to the other side. However such an offset arrangement introduces an undesirable increase in complexity.

By using the present invention it is possible to avoid the problems of conventional lenses and transmissive holographic elements.

The present invention provides an optical combination comprising a first optical element and a second optical element in which each optical element is arranged to transmit or reflect incident radiation depending on the angle of incidence of the radiation; and in which the angle of incidence at which radiation may be transmitted by one optical element is different from the angle of incidence at which radiation may be transmitted by the other optical element and the angle of incidence at which radiation may be reflected by one optical element is different from the angle of incidence at which radiation may be reflected by the other optical element; and in which the optical elements are arranged to cooperate so that a ray-path is established through the combination, whereby, in use, following the ray-path
(a) radiation transmitted by the first optical element is reflected by the second optical element,
(b) the radiation reflected by the second optical element is reflected by the first optical element, and
(c) the radiation reflected by the first optical element is transmitted by the second optical element in which the angle of incidence of a ray following the ray path at the first optical element has the same magnitude as the angle of reflection of that ray at that optical element and in which the angle of incidence of the ray at the second optical element has a different magnitude from the angle of reflection of that ray at that optical element.

The present invention also provides an optical combination comprising a first and a second optical element arranged to cooperate wherein, in use, along a ray-path through the combination in a first direction radiation transmitted by the first optical element is reflected by the second optical element, radiation reflected by the second optical element is reflected by the first optical element, and radiation reflected by the first optical element is transmitted by the second optical element; in which the angle of incidence of the radiation reflected at one of the optical elements is of the same magnitude as the angle of reflection of the radiation at that optical element; and in which the angle of incidence of the radiation reflected at the other one of the optical elements is of a different magnitude to the angle of reflection of the radiation at that optical element.

The present invention also provides the above optical combination in which the first and second optical elements are inclined at an angle to each other and in which the angle of incidence at which radiation is transmitted through the first or the second optical element in use is equal to or less than the angle of inclination.

The present invention also provides an optical device comprising a first reflective optical element and a second reflective optical element arranged so as to redirect radiation reflected by the first optical element back to the first optical element at an angle such that it is transmitted through it in which one of the optical elements is a powered hologram and in which the other optical element is not powered.

The present invention also provides a first optical combination comprising two second optical combinations each second optical combination comprising a first and a second optical element arranged to cooperate wherein, in use, along a ray-path through each of the second optical combinations in a first direction radiation transmitted by the first optical element is reflected by the second optical element, radiation reflected by the second optical element is reflected by the first optical element, and radiation reflected by the first optical element is transmitted by the second optical element in which the two second optical combinations are arranged to cooperate wherein the ray-paths of each second optical combination align to form a new ray-path.

Two embodiments of the invention will now be described by way of example with reference to the drawings in which:
Figure 1 shows in ray diagram form a first embodiment of the invention;
Figure 2 shows a second embodiment of the invention.

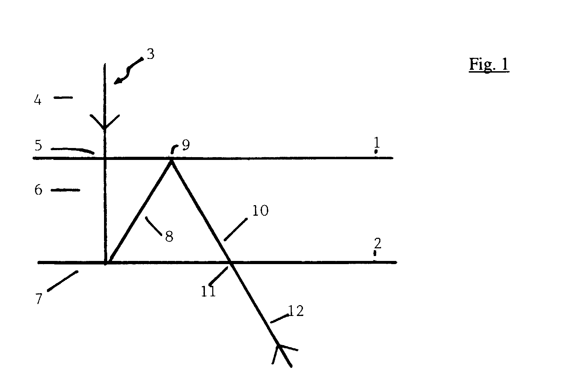

Both of these embodiments of the invention use reflective elements in combination to achieve transmission of incident radiation. They therefore avoid the disadvantages of conventional transmissive and reflective arrangements. Turning to figure 1 a first embodiment of the invention is shown comprising two optical elements in the form of parallel layers 1, 2. In order to illustrate the operation of this embodiment the path of an incident ray 3 is shown as it traverses the optical combination. Each optical element has the property of selective reflection and transmission of incident radiation, i.e. that it will transmit radiation incident at a certain angle and reflect radiation incident at a different angle. In addition these angles are different for each optical element so that the transmit angle of one element is different from the transmit angle of the other element and the reflection angle of one element is different from the reflection angle of the other element. Thus, as shown by way of example in the arrangement of figure 1, ray-part 4 of incident ray 3 meets optical element 1 at point 5 with an angle of incidence of about 0° (i.e. perpendicular to the surface of element 1 at point 5). Optical element 1 has the property of transmitting radiation incident at 0° and ray-part 4 is transmitted as ray-part 6. Ray-part 6 subsequently meets element 2 at point 7 again with an angle of incidence of about 0°, elements 1 and 2 forming parallel layers. However, the optical properties of element 2 are different from the optical properties of element 1. Optical element 2 has the property of reflecting radiation incident at 0° and ray-part 6 is reflected by element 2 to form ray-part 8.

As an alternative to the above embodiment, the radiation in ray-part 4 may meet optical element 2 at point 7 without passing through optical element 1.

In addition to the optical properties described above, element 2 also has the property that the angle of reflection at the surface of element 2 of a reflected ray will have a different magnitude to the angle of incidence of the corresponding incident ray. As can be seen from figure 1, ray-part 6, incident at element 2 at an angle of about 0°, is reflected as ray-part 8 at an angle of reflection of about 30°. Reflected ray-part 8 then travels back to meet element 1, this time with an angle of incidence of about 30°. As a result of the changed angle of incidence the ray-part 8 is reflected by element 1 forming reflected ray-part 10. As will be seen from the illustration of figure 1, the angle of reflection of the ray at the surface of element 1 equals the angle of incidence. Ray-part 10 proceeds from element 1 back to element 2 and meets the surface of element 2 at point 11 where it forms an angle of incidence of about 30°. The angle of incidence of ray-part 10 at surface of element 2 is different from the angle of incidence of the ray-part 6 and, instead of being reflected, the ray-part 10 is transmitted by element 2 and forms transmitted ray-part 12 with which ray 3 exits the optical combination. Hence the arrangement of figure 1 uses two reflective elements in cooperation to create a transmissive combination element.

The arrangement of figure 1 is completely bidirectional and radiation can pass along ray 3 in both directions.

It will be seen that with the parallel arrangement of figure 1, the incident angle at which optical element 1 transmits radiation corresponds to the incident angle at which optical element 2 reflects radiation and the incident angle at which optical element 1 reflects radiation corresponds to the incident angle at which optical element 2 transmits radiation.

The property of the optical elements of figure 1 wherein radiation incident at a first angle is transmitted and radiation incident at a second angle is reflected maybe achieved by conventional means such as holograms or coatings including dielectric coating or rugate coatings. The additional property exhibited by element 2 wherein the angle of reflection is different in magnitude from the angle of incidence may be provided by conventional holographic techniques, e.g. by using a powered hologram.

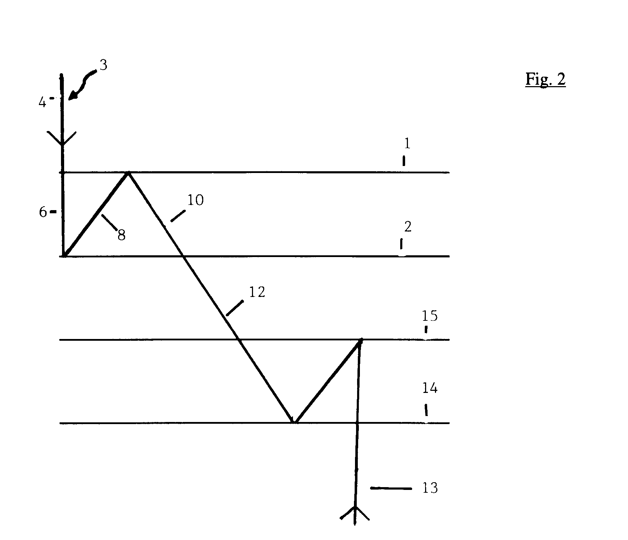

Turning to figure 2 a second embodiment of the invention is illustrated. In figure 2 elements common with figure 1 are annotated with the same reference numerals. As can be seen from figure 2, the arrangement of the second embodiment comprises a pair of the arrangements of the first embodiment as shown in figure 1 arranged parallel to each other and "back-to-back" so that the exit ray-part of the first arrangement forms the incident ray-part of the second. Whereas with the first embodiment the exit ray-part 12 is at an angle to the incident ray-part 4, with the arrangement of the second embodiment the exit ray-part 13 is parallel to the same incident ray-part 4. In addition, a four element arrangement of the kind shown in figure 2 may provide improved colour correction when compared with the arrangement of figure 1.

In figure 2 optical elements 1 and 2 are the same as those in figure 1. Additional optical element 14 has similar properties to optical element 1, i.e. the transmission of radiation incident at a certain angle and the reflection of radiation incident at a different angle. Optical elements 14 and 1 would typically be of the same construction. Optical element 15 has the similar optical properties to optical element 2, i.e. in addition to the selective reflection and transmission of incident radiation, optical element 15 will reflect an incident ray wherein the angle of reflection is of different magnitude to the angle of incidence as shown in the figure. Optical elements 2 and 15 can be implemented using powered holographic optical elements, i.e. powered holograms.

The arrangement of figure 2 is also completely bidirectional and radiation can pass along ray-path 3 in both directions.

As an alternative to the arrangement of figure 2, the order of the elements could be changed by swapping the positions of elements 1 and 2 and swapping the positions of elements 14 and 15.

The above embodiments are given by way of example only and do not restrict the scope of the invention which may be implemented with modifications obvious to the skilled worker in the field, including the use of surface-effect holograms or dielectric layers for non-powered elements. In addition it would be obvious to the skilled worker that the elements of the embodiment need not be parallel, depending on the desired effect and that the exit ray-part for the embodiment of figure 2 may be selected to be other than parallel to the incident ray-part. The invention is similarly not limited to combinations of two or four elements but also extends to any multiple of two elements.

As an alternative to the essentially planar elements illustrated in the drawings, any surface may be angled, curved or non-planar in order to provide additional optical properties, e.g. of a type which may be provided by a conventional lens.
File No: P/61003.EPP Int. Class: G02B
Internal Title: Holographic HUD Lenses
Priority Patent Appln. No: Date:
Refiled Patent Appln. No: Date:
Inventor(s): J P Freeman
Specification Title: Optical Device
Applicant: GEC-Marconi Limited
Sponsor:
Sponsor's Reference: MAD
Responsible Person: A P Cardus

### SUMMARY

Transmissive holograms elements have increasingly been used in place of conventional lenses because of the reduction in volume that can be achieved, together with improved optical characteristics. However the transmission hologram has a number of disadvantages which reduce its efficiency. Reflection holograms do not suffer from the problems of transmissive holograms, but do suffer the problem of interference of the radiation source or sensor with the reflected or incident rays respectively. The invention uses reflective elements in combination to achieve transmission of incident radiation, thereby avoiding the disadvantages of conventional transmissive and reflective arrangements. An optical combination according to the invention comprises a first and a second optical element wherein each optical element is arranged to transmit or reflect incident radiation depending on the angle of incidence of the radiation; the transmit angle of incidence of one optical element is different from the corresponding angle of the other optical element; and the reflection angle of incidence of one optical element is different from the corresponding angle of the other optical element. One of the optical elements is a powered hologram so that the angle of incidence of a ray at the powered element has a different magnitude from the angle of reflection of that ray. As a consequence: radiation transmitted by the first optical element is reflected by a second optical element, the radiation reflected by the second optical element is reflected by the first optical element and the radiation reflected by the first optical element is transmitted by the second optical element.

## Claims

1. An optical combination comprising a first optical element and a second optical element in which each optical element is arranged to transmit or reflect incident radiation depending on the angle of incidence of the radiation; and in which the angle of incidence at which radiation may be transmitted by one optical element is different from the angle of incidence at which radiation may be transmitted by the other optical element and the angle of incidence at which radiation may be reflected by one optical element is different from the angle of incidence at which radiation may be reflected by the other optical element; and in which the optical elements are arranged to cooperate so that a ray-path is established through the combination, whereby, in use, following the ray-path
(a) radiation transmitted by the first optical element is reflected by the second optical element,
(b) the radiation reflected by the second optical element is reflected by the first optical element, and
(c) the radiation reflected by the first optical element is transmitted by the second optical element in which the angle of incidence of a ray following the ray path at the first optical element has the same magnitude as the angle of reflection of that ray at that optical element and in which the angle of incidence of the ray at the second optical element has a different magnitude from the angle of reflection of that ray at that optical element.

2. An optical combination comprising a first and a second optical element arranged to cooperate wherein, in use, along a ray-path through the combination in a first direction radiation transmitted by the first optical element is reflected by the second optical element, radiation reflected by the second optical element is reflected by the first optical element, and radiation reflected by the first optical element is transmitted by the second optical element; in which the angle of incidence of the radiation reflected at one of the optical elements is of the same magnitude as the angle of reflection of the radiation at that optical element; and in which the angle of incidence of the radiation reflected at the other one of the optical elements is of a different magnitude to the angle of reflection of the radiation at that optical element.

3. The optical combination of any one of the above claims wherein the first and second optical elements are arranged in parallel.

4. The optical combination of any one of the above claims wherein at least one of the optical elements comprises a curved surface.

5. The optical combination of any one of the above claims wherein at least one of the optical elements has non-parallel major surfaces.

6. The optical combination of any one of Claims 1, 2, 4 and 5 in which the first and second optical elements are inclined at an angle to each other and in which the angle of incidence at which radiation is transmitted through the first or the second optical element in use is equal to or less than the angle of inclination.

7. A second optical combination comprising two of the optical combinations according to Claim 2 arranged to cooperate wherein the ray-paths of each optical combination align to form a new ray-path.

8. The second optical combination of Claim 7 wherein the order of optical elements is first second second first.

9. The second optical combination of Claim 7 wherein the order of optical elements is second first first second.

10. The second optical combination any one of Claims 7 to 9 wherein in use a ray enters and exits the second optical combination along parallel paths.

11. An optical device comprising a first reflective optical element and a second reflective optical element arranged so as to redirect radiation reflected by the first optical element back to the first optical element at an angle such that it is transmitted through it in which one of the optical elements is a powered hologram and in which the other optical element is not powered.

12. A device according to Claim 11 in which the first and second optical elements are parallel.

13. A device according to Claim 11 in which the first and second optical elements are inclined at an angle to each other and in which the angle of incidence at which radiation is transmitted through the first or the second optical element in use is equal to or less than the angle of inclination.

14. A first optical combination comprising two second optical combinations each second optical combination comprising a first and a second optical element arranged to cooperate wherein, in use, along a ray-path through each of the second optical combinations in a first direction radiation transmitted by the first optical element is reflected by the second optical element, radiation reflected by the second optical element is reflected by the first optical element, and radiation reflected by the first optical element is transmitted by the second optical element in which the two second optical combinations are arranged to cooperate wherein the ray-paths of each second optical combination align to form a new ray-path.

15. The first optical combination of Claim 14 wherein the order of optical elements is first second second first.

16. The first optical combination of Claim 14 wherein the order of optical elements is second first first second.

17. The first optical combination of any one of Claims 14 to 16 wherein in use a ray enters and exits the second optical combination along parallel paths.
